# EUROPEAN PATENT APPLICATION

(11) **EP 1 757 882 A2**
(43) Date of publication of application: **28.02.2007**
(21) Application number: 06019192.1
(22) Date of filing: 23.08.2001
(51) Int. Cl.: F25D 25/00, G01N 35/02, F25D 29/00

(54) **Automated storage and retrieval apparatus for freezers and related method thereof**

(30) Priority: 23.08.2000 US 227166 P; 20.06.2001 US 299597 P
(62) Divisional of application: 01964350.1
(71) Applicant: UNIVERSITY OF VIRGINIA PATENT FOUNDATION, Charlottesville, VA 22902 (US)
(72) Inventor: Felder, Robin A., Charlottesville, VA 22903 (US); Graves, B. Sean, Charlottesville, VA 22902 (US); Gunderson, James P., Charlottesville, VA 22903 (US)
(74) Representative: Appelt, Christian W.

(57) **Abstract**

An automated cold storage apparatus (1), and related method thereof, provides a sample process management system that is a revolutionary approach to the storage and retrieval regarding critical samples. Samples in containers are stored and retrieved robotically through an airlock climate-control chamber (60) that is automatically dehumidified by a dry gas purge, such as a carbon dioxide or nitrogen purge or the like. This purge rapidly reduces ambient humidity to a desirable relative humidity (RH), e.g., less than about 15 % RH, virtually eliminating the accumulation of frost. Microplates are systematically identified using barcode technology, for example. Once through the climate-controlled chamber (60), the containers (i.e., samples) are robotically transferred to the rotary mechanism (43). This mechanism (43) transports the containers to a derived nest location upon the storage means, such as a carousel (20) or to one of the stationary addresses (26, 27).

## Description

### RELATED APPLICATIONS

This application claims priority from U.S. Provisional Application Serial Numbers 60/227,166, filed on August 23, 2000, entitled "Automated Storage and Retrieval Apparatus for Freezers and Related Method Thereof," and 60/299,597, filed on June 20, 2001, entitled "Automated Storage and Retrieval Apparatus for Freezers and Related Method Thereof," the entire disclosures of which are hereby incorporated by reference herein.

### FIELD OF INVENTION

This invention relates to an automated storage and retrieval apparatus for ultra low temperature freezers, and more particularly an apparatus that improves the overall quality of the climate associated with storing items therein.

### BACKGROUND OF INVENTION

Advancements in biotechnology and medical science require the analysis of ever-increasing numbers of various biological samples. Many biological samples must be stored at below-freezing temperatures in order to preserve them for future reference, analysis, or use. For example, DNA, RNA, cells and protein samples, as well as the reagents necessary for conducting various analyses of these samples, must be stored at ultra-cold temperatures to prevent degradation that would interfere with reliable analyses of the biological products.

Storage below -80°C is generally required for successful preservation of biomolecules, cells, and tissue (morphology and viability) for extended periods of time. However, shelf life and the ability to recover living cells are dramatically improved at about -196°C (-196°C being the boiling point of liquid nitrogen). The National Institute of Standards and Technology has suggested that the term cryogenics be applied to all temperatures below -150° C (-238° F or 123° above absolute zero on the Kelvin scale). Some scientists regard the normal boiling point of oxygen (-183° C or -297° F), as the upper limit. The term ultra low temperature is probably not officially recognized by any standards body. However, it is generally agreed that a freezer refers to a storage device that operates from about-5°C to -20°C, an ultra low operates from about -50°C to about-90°C, and a cryogenic freezer operates from about -140°C to -196°C.

There are many problems associated with placement and retrieval of samples from ordinary laboratory freezer compartments. For instance, in an ordinary freezer compartment, containers of samples must be stored in front of and on top of each other to maximize use of the available space. Even if the containers are of standard sizes, and therefore easily stackable and even if a positional inventory of the samples is kept, it is still necessary to shuffle the containers around manually in order to retrieve a desired container. This is problematic because it requires keeping the freezer door open for possibly extended periods of time. Keeping the freezer door open causes the interior temperature of the freezer compartment to rise temporarily, which can cause thawing of samples housed near the door of the freezer. Once the freezer is closed and the temperature decreases, the samples refreeze. This repeated freezing and thawing can cause more rapid degradation of samples. Keeping the freezer door open also allows frost to build up in the freezer compartment. With repeated openings of the door, the frost eventually can freeze containers to the bottom of the freezer compartment or to each other. As a result, the door must be kept open longer in order to break containers out of the frost, which only exacerbates the problem.

The increasing need for high quality bio-repositories in hospitals, research institutions, and pharmaceutical clinical research laboratories provides a market for automated ultra-cold storage devices that will improve sample quality, organize storage, provide rapid access to all specimens, and maintain electronic records of all specimens stored within the container.

U.S. Pat. No. 5,921,102 to Vago, herein incorporated by reference, utilizes a storage apparatus particularly with automatic insertion and retrieval. Drawbacks of the Vago approach, but not limited thereto, are that it fails to provide the climate control associated with the freezer and the various interchanging devices, and other features and aspects.

There is therefore a need in the art for an automated cold storage apparatus, and related method thereof, that can provide, among other things a more organized storage and retrieval apparatus, less accumulation of moisture and frost within the cold storage compartment, less temperature fluctuation from sample withdrawal, and rapid random access to all specimens.

### SUMMARY OF THE INVENTION

The present invention automated cold storage apparatus, and related method thereof, provides a sample process management system that is a revolutionary approach to the storage and retrieval of critical samples. The system - a significant technological breakthrough in laboratory automation - is the first ultra low temperature robotic system capable of being validated. Samples in containers are stored and retrieved robotically through an airlock climate-control chamber (access means) that is automatically dehumidified by a dry gas purge, such as a carbon dioxide or nitrogen purge or the like. This purge rapidly reduces ambient humidity to a desirable relative humidity (RH), e.g., less than about 15 % RH, virtually eliminating the accumulation of frost. Microplates or storage containers, or the like, are systematically identified using barcode technology, for example. Once through the climate-controlled chamber, the containers (i.e., samples) are robotically transferred to the rotary mechanism. This mechanism transports the containers to a derived nest location upon the storage means, such as a carousel or one of the stationary addresses. For illustrative purposes only, the carousel and stationary nests may have a combined capacity of 1,000 standard microplates. It is contemplated that various capacities may be designed.

The preferred embodiments of the present invention automated storage and retrieval apparatus, and related method thereof, operate at an ultra low temperature of about -50°C to about-90°C. It should be understood that the apparatus may operate in a range of -50°C up to ambient temperature or greater. The normal design operating temperature of the freezer compartment of the present invention is about -80°C. It should be noted that the present invention is contemplated to operate at conditions colder than ultra low temperatures in the range of about -140°C to about-90°C. Conveniently, if the freezer fails for whatever reason - maintenance or scheduled outage - then liquid carbon dioxide can be pumped into the system and keep it at approximately -78°C. The ultra low freezer set point (approximately 78°C) of the apparatus can be backed up by installing a cylinder of liquid carbon dioxide.

In one aspect, the present invention features an automated storage and retrieval apparatus for storing containers at ultra low temperatures or other preferred temperatures. The apparatus comprising: a freezer compartment, the freezer compartment having a side wall; a storage carousel disposed inside the freezer compartment for holding the containers; a climate-controlled chamber disposed on the side wall; a climate system for controlling the climate of the chamber; and an interchange mechanism configured. The interchange mechanism is configured to: interchange a container between the interchange mechanism and the climate-controlled chamber while in a chamber exchange position, and interchange a container between the interchange mechanism and the carousel while in a carousel exchange position. The chamber also being configured to: isolate the container from the interchange mechanism as container is deposited from the exterior or placed into the exterior, and isolate the container from the exterior as container is exchanged between the chamber and the interchange mechanism.

In some embodiments, the carousel can be replaced with a stationary storage rack, and additional storage racks may be added. The interchange mechanism is configured to interchange a container between the interchange mechanism and the rack(s) while in a rack exchange position(s).

In a second aspect, the present invention provides an automated storage and retrieval apparatus for storing containers at ultra low temperatures or other preferred temperatures. The apparatus comprising: a freezer means for freezing the containers; a storage means disposed inside the freezer means for holding the containers; a chamber means for interchanging the containers between the exterior and the freezer means; a climate system control means for controlling the climate of the chamber means; and an interchange means. The interchange means for: interchanging a container between the interchange means and the chamber means while in a chamber exchange position, and interchanging a container between the interchange means and the storage means while in a storage exchange position. The chamber means for: isolating the container from the interchange means as container is deposited from the exterior or placed into the exterior, and isolating the container from the exterior as container is exchanged between the chamber means and said interchange means.

In a third aspect, the present invention provides a method for automatically depositing and storing containers, as well as a method for storing and retrieving containers in a freezer compartment of an automated apparatus. The apparatus comprising: a freezer means for freezing the containers; a storage means disposed inside the freezer means for holding the containers; a chamber means for interchanging the containers between the exterior and the freezer means; a climate system control means for controlling the climate of the chamber means; and an interchange means. The interchange means for: interchanging a container between the interchange means and the chamber means while in a chamber exchange position, and interchanging a container between the interchange means and the storage means while in a storage exchange position. The chamber means for: isolating the container from the interchange means as container is deposited from the exterior or placed into the exterior, and isolating the container from the exterior as container is exchanged between the chamber means and said interchange means.

An advantage of the present invention automated storage and retrieval apparatus for ultra low temperature freezers, and related method thereof, is that the apparatus can operate in a stand-alone mode or can be integrated into a completely automated laboratory. It is scalable to meet the needs of small laboratories as well as large institutions that will require long-term storage of large numbers of samples.

Another advantage of the present invention is that the apparatus can be designed as a slide-in unit for existing ultra-cold freezers, which will keep the majority of the hardware in the door so as to be insulated from the freezer compartment, minimizing both the number of low-temperature hardware components and the actual alteration to the freezer itself. A reduced number of moving components is continuously exposed to the design temperature of about -80° C, reducing the cost of production.

Further advantages of the present invention are attributed to the improved sample quality, lowered operating costs, and reduced maintenance of the automated storage and retrieval apparatus.

Finally, an advantage of the present invention is that it provides ultra-low temperature automation or lower and user-friendly information technology in a proven reliable manner.

These and other objects, along with advantages and features of the invention disclosed herein, will be made more apparent from the description, drawings and claims that follow.

### BRIEF DESCRIPTION OF THE DRAWINGS

The foregoing and other objects, features and advantages of the present invention, as well as the invention itself, will be more fully understood from the following description of preferred embodiments, when read together with the accompanying drawings, in which:
Figure 1 shows a schematic plan view of the automated storage and retrieval apparatus.
Figure 2A shows a schematic perspective view of the automated storage and retrieval apparatus.
Figure 2B shows a perspective partial view of the door or wall of a compartment and/or housing.
Figure 3 shows a schematic cross-sectional view of the climate controlled chamber with the exterior door in open and closed positions.
Figures 4A and 4B show a schematic frontal view and plan view, respectively, of the related translation mechanisms of the climate controlled chamber.
Figures 5A-5D show a schematic representation of select positions of the rotational alignment of the interchange mechanism.
Figures 6A and 6B comprise a flow chart illustrating the operation for depositing and storing a storage container or the like in the automated storage and retrieval apparatus.
Figures 7A and 7B comprise a flow chart illustrating the operation for retrieving the targeted or desired storage container or the like in the automated storage and retrieval apparatus.
Figure 8 shows a schematic perspective view of the storage carousel of the automated storage and retrieval apparatus.
Figure 9 shows a perspective view of an individual vertical rack from the carousel of **FIG. 8**, comprised of a plurality of storage trays,
Figures 10A and 10B show a schematic perspective view of the storage trays and their related cooperation with the vertical supports of the carousel.
Figures 11A and 11B are schematic perspective views of the interchange mechanism and related components.
Figure 12 shows a schematic block diagram of the general features of the control system of the automated storage and retrieval apparatus.
Figure 13 shows a schematic block diagram of an exemplary computer system associated with an embodiment of the automated storage and retrieval apparatus.
Figures 14A and 14B show schematic perspective views of an alternative embodiment of the automated storage and retrieval apparatus.
Figures 15A-15D show schematic plan views of an alternative embodiment of the automated storage and retrieval apparatus providing expanded network system of cooperating freezer apparatuses.
Figure 16A and 16B show schematic perspective front/exterior views of the housing of the climate control chamber with related components in both the closed and open position, respectively.
Figure 17A and 17B show schematic perspective back/interior views of the housing of the climate control chamber with related components in both the closed and open position, respectively.

### DETAILED DESCRIPTION OF THE INVENTION

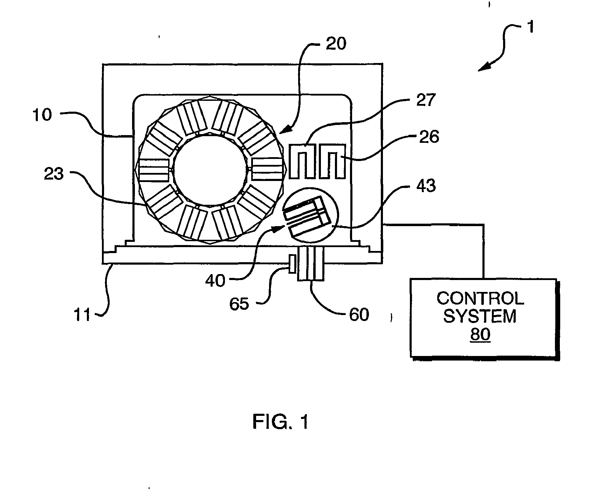

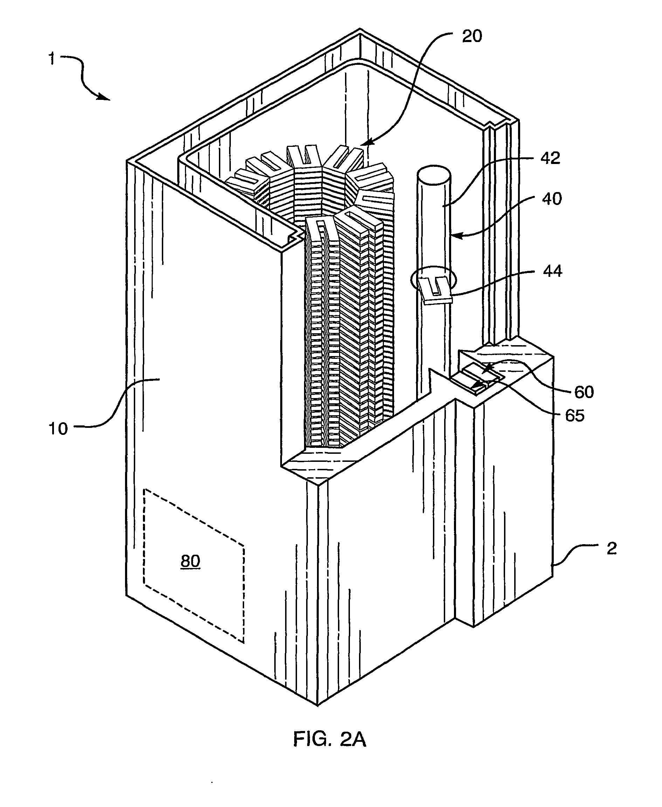

Turning now to the drawings, the present invention is schematically shown in the plan view of **FIG. 1** and perspective view of **FIG. 2A,** which includes an automated storage and retrieval apparatus **1** having one or more storage carousels **20** disposed in a freezer compartment **10,** with one or more optional stationary racks **26, 27,** an interchange mechanism **40,** and a climate controlled chamber **60** that is generally disposed on a wall **11** of the freezer compartment **10** or associated housing **2.** A central control system **80** is coupled to the storage carousel **20,** interchange mechanism **40,** and climate controlled chamber **60** for controlling their operations. Generally, the control system **80** controls the operation of the apparatus so that the containers can be loaded from the exterior into the climate-controlled chamber **60** for retrieval by the interchange mechanism **40** for insertion onto the carousel **20** in the freezer compartment **10.** Stored containers subsequently can be retrieved from the carousel **20** by the interchange mechanism **40** and available to be taken away to the exterior through the climate controlled chamber **60.**

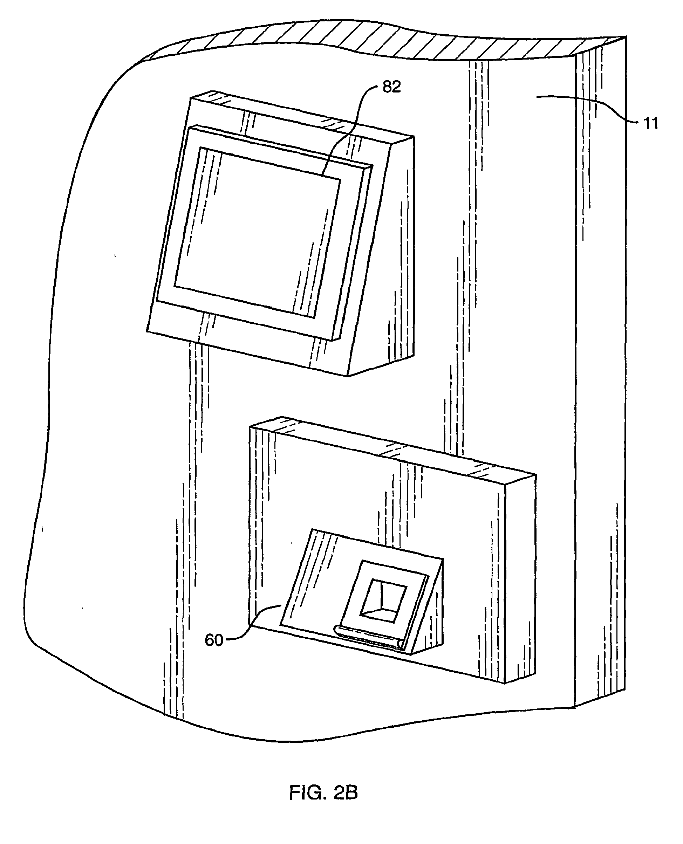

**FIG. 2B** shows a perspective partial view of the wall **11** of the compartment and/or door of the housing. Mounted on the wall **11** are the climate-controlled chamber **60** and a touch screen interface **82.** As will be discussed later, it is envisioned that a control system and computer system can be accessed directly by using the touch screen interface **82** and/or remotely by a stand-alone personal computer or with a local area network (LAN).

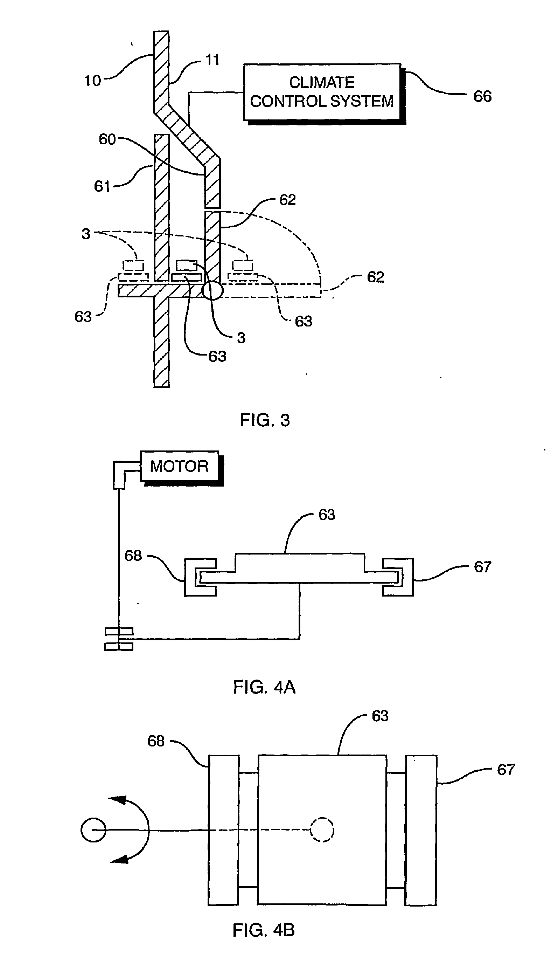

Next, details of the climate controlled chamber **60** will be provided, as best shown in **FIGS. 3** and **4A-4B**. A particularly desirable feature is that the climate-controlled chamber **60** prevents ambient, humid air from entering the interior of freezer compartment **10** during storage container insertion and retrieval. The Chamber **60** has an interior door **61** to allow communication between freezer compartment **10** and chamber **60,** and an exterior door **62** to allow communication between the exterior environment (or adjacent area)and chamber **60.** The chamber **60** has a climate control system **66** that provides an air purging capability to cool and dehumidify the air in the chamber **60** before interior door **61** is opened. A scanning reader device **65,** preferably a barcode reader, is situated in the chamber **60** to identify storage containers as they are inserted into and retrieved from chamber **60.** Information relative to the storage containers is transmitted from reader device **65** to central and/or remote processor.

Still referring to **FIGS. 3** and **4A-4B,** the storage containers **3** are carried by a transport tray **63** that is slidably mounted on two channels **67, 68.** The transport tray **63** can transport the container **3** to the exterior as the exterior door **62** is open, as indicated by the dashed lines. Alternatively, the transport tray **63** can transport the container **3** to the interior of the freezer compartment **10** as the interior door **61** is open, as indicated by the dotted lines. In one embodiment, the interior door **61** may slide open and close on a track (not shown). A climate control system **66** is in communication with the chamber **60** that dehumidifies and cools the chamber **60** while the container is isolated therein, i.e., both exterior and interior doors are closed. The climate control system **66** includes a dry gas or dry air purge (i.e., nitrogen, carbon dioxide, or the like), that rapidly reduces ambient humidity to any desired level, e.g., less than about 25 % relative humidity (RH) and as low as about 1% RH. In fact, any compressed gas from which moisture has been removed will reduce the humidity in the airlock, and will cool the airlock by adiabatic expansion to about -10°C to about 0°C, or as desired.

A preferred embodiments of the present invention automated storage and retrieval apparatus, and related method thereof, operate at an ultra low temperature from about-50°C to about-90°C. It should be understood that the apparatus may operate in a range of -50°C up to ambient temperature or greater. The normal design operating temperature of the freezer compartment of the present invention is about -80°C. It should be noted that the present invention is contemplated to operate at conditions colder than ultra low temperatures in the range of about -140°C to about -90°C. Conveniently, if the freezer fails for whatever reason --maintenance or scheduled outage-- then liquid carbon dioxide can be pumped into the system and keep it at approximately -78°C. Thus, the ultra low freezer-set point of the apparatus can be backed up by installing a cylinder of liquid carbon dioxide.

One skilled in the art would appreciate that various types and substitutes for interior and exterior chamber doors can be used. Moreover, a single door can be utilized which can rotate between interior and exterior sides.

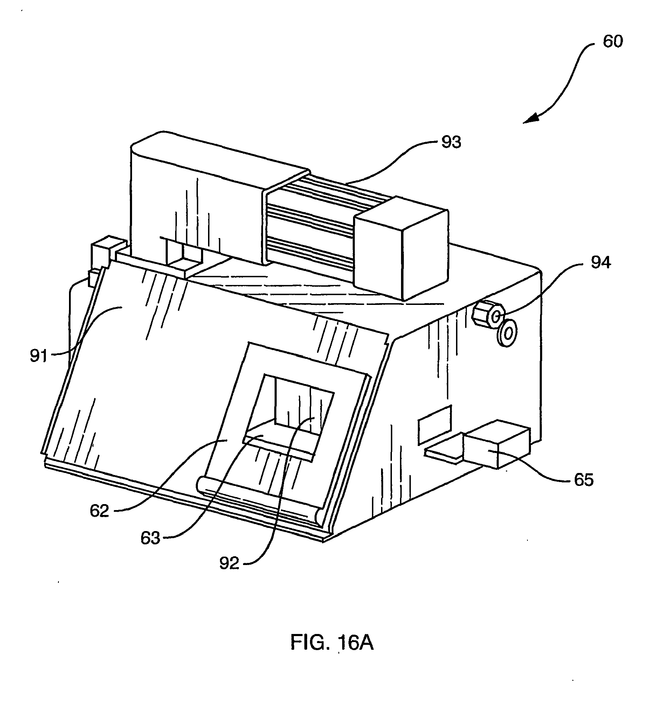

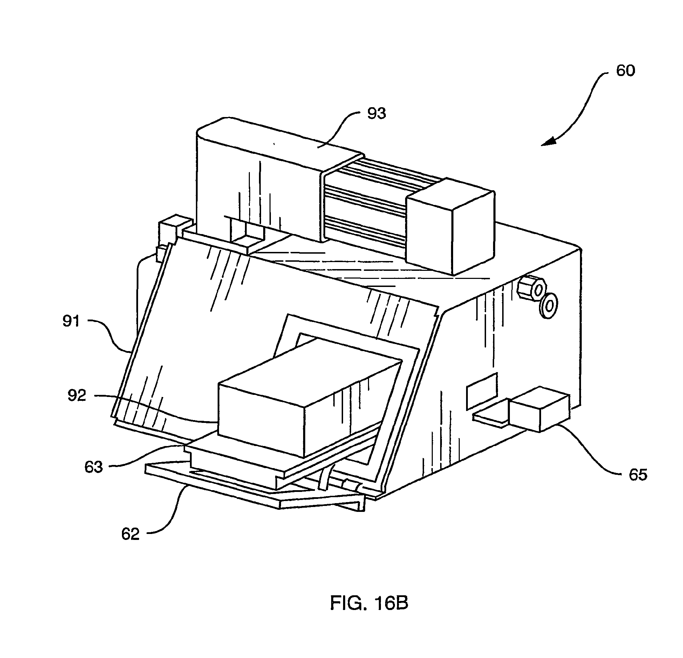

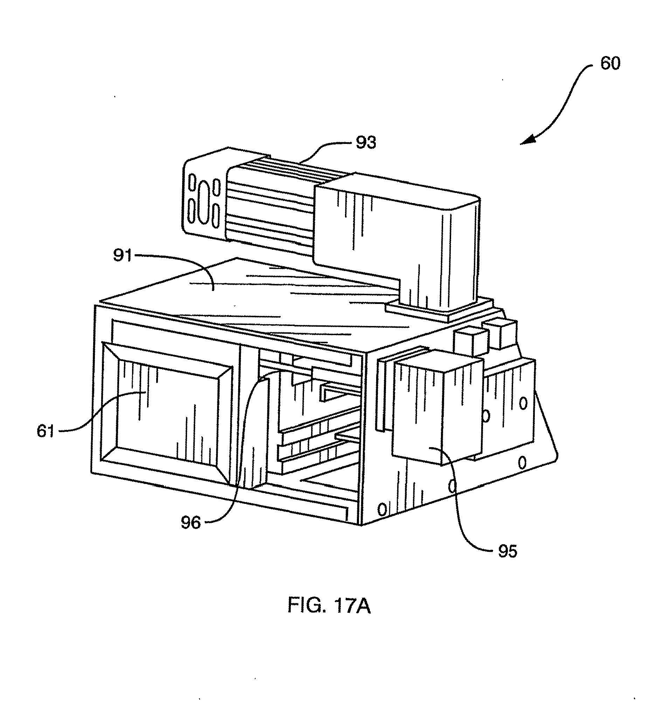

Additional details pertaining to the climate controlled chamber 60 will be provided, as best shown in the perspective views of **FIGS. 16A-16B** and **FIGS. 17A-17B.** The front/exterior view and the back/interior view of climate controlled chamber **60** are shown in **FIGS. 16A-16B** and **FIGS. 17A-17B,** respectively. Referring to front/exterior view of **FIG.16A,** the chamber **60** includes a chamber housing **91** having its exterior door **62** in a closed position with a deep well micro-plate **92** placed thereon the transport tray **63.** It should be appreciated that a shallow well micro-plate may be used, as well as any other size, type, or number of containers, which can be accommodated for storage and interchange. Also shown is a tray-motor and gear box housing **93,** reading device **65,** and air purge port **94. FIG. 16B** shows the chamber **60** having its exterior door **62** in an open position.

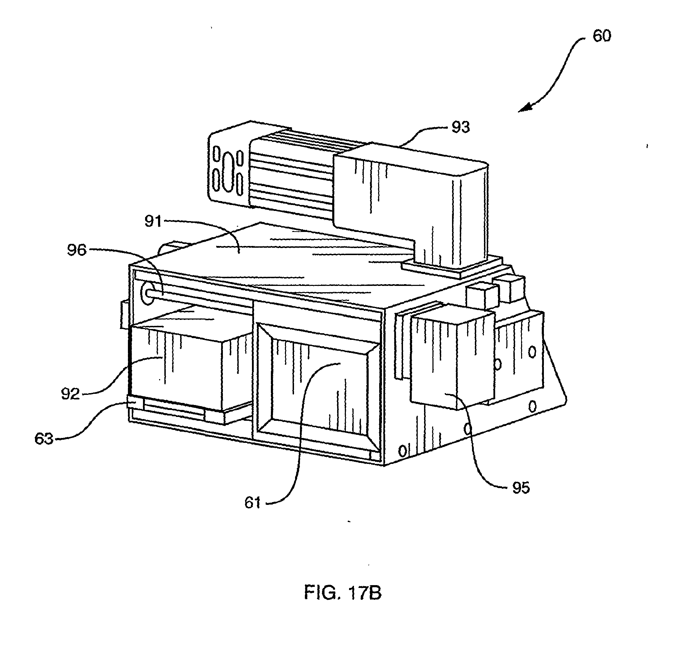

Referring to the back/interior view of **FIGS. 17A-17B,** there is shown the chamber **60** including an interior door-motor gear and motor housing **95** and lead screw **96,** and having its interior door **61** in a closed position. **FIG. 17B** shows the chamber **60** having its interior door **61** in an open position with the deep well micro-plate **92** placed thereon the transport tray **63.**

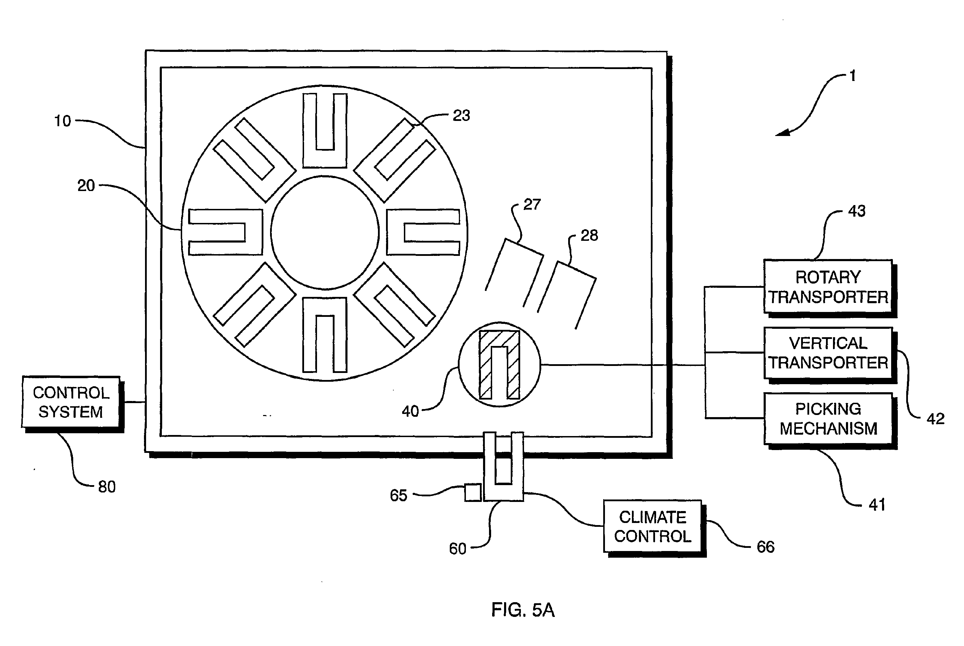

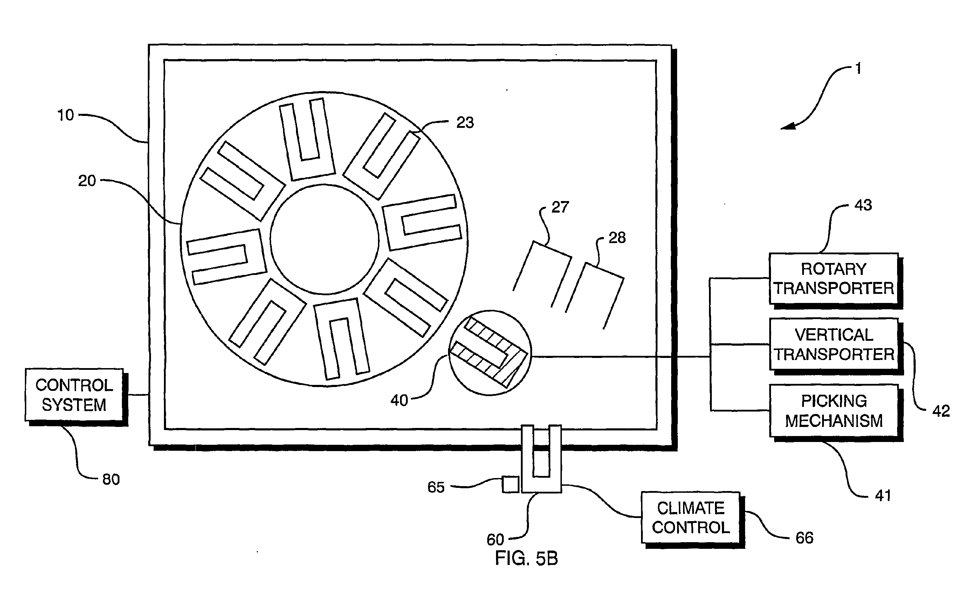

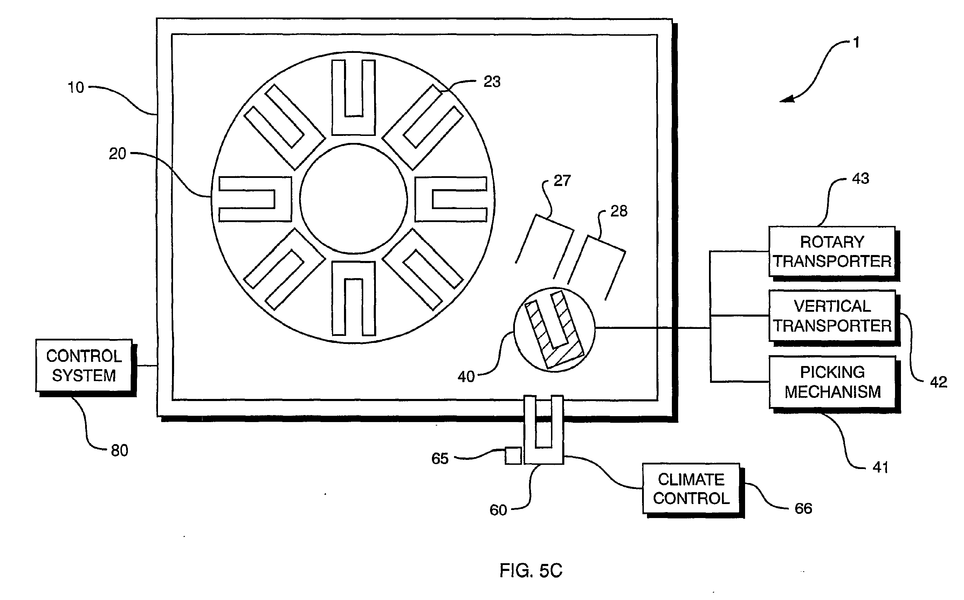

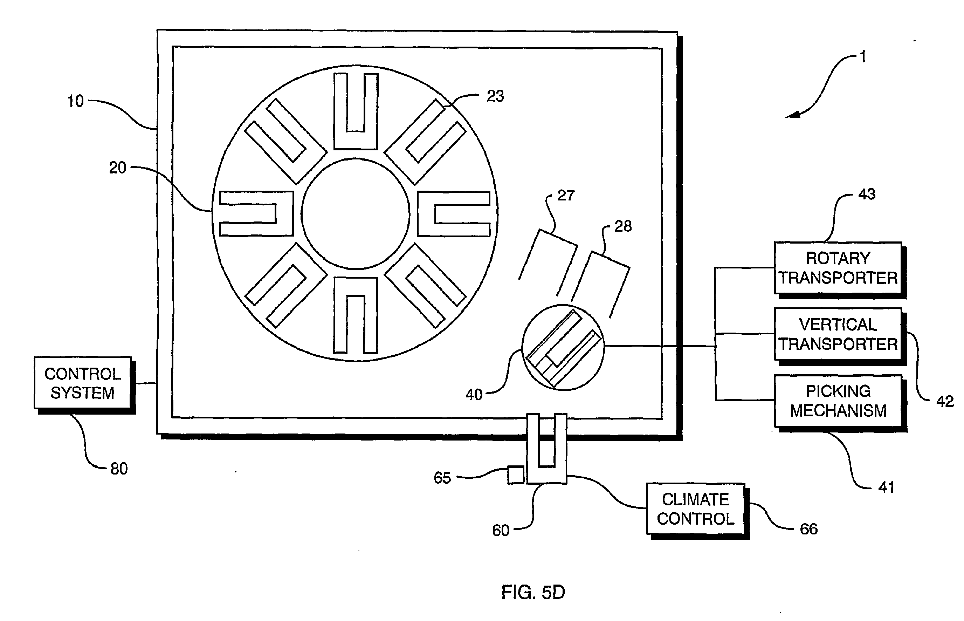

Additional details of the cooperation between the freezer compartment **10,** carousel **20,** stationary racks **26, 27,** interchange mechanism **40,** and climate-controlled chamber **60** are schematically shown referring to **FIGS. 5A-5D**. The interchange mechanism **40** is configured to interchange containers between it and the carousel **20** (See **FIG. 5B**), stationary storage racks **26, 27** (See **FIGS. 5C-5D**, respectively), and the climate-controlled compartment **60** (See **FIG. 5A**). Various storage means besides the disclosed carousels or stationary racks are contemplated, such storage means include the following but are not limited thereto automated stackers, and with possible additional hardware, rectangular arrays of storage nests (or any predetermined shaped carousel/rack including linear, oval, pentagonal, hexagonal, etc.). The interchange mechanism **40** requires a picking mechanism **41** for horizontally translating the interchange tray **44** for interchanging the container **3** with the carousel **20** or the climate controlled chamber **60.** Various picking mechanisms include, but not limited thereto lead screws, picking devices, vacuum devices, side gripping fingers, vertical pincers, and conveyors. The interchange mechanism **40** further comprises a vertical transporter **42** configured to allow the interchange mechanism **40** to be translated vertically over a plurality of discrete heights. Various vertical transporters include, but not limited thereto lead screws, chain drives, and conveyors. Further yet, the interchange mechanism **40** comprises a rotary transporter **43** that is configured to rotate the interchange mechanism **60** to a plurality of discrete circumferential positions. Various rotary mechanisms include, but not limited thereto lead screws, pivot devices, gear drives, belt or chain drives, pneumatic or hydraulic devices, and conveyors.

With regards to control operations, the present invention automation and robotic motions described herein are provided in part by the control system **80** and processor **81.** It should be noted that the following exemplary sequences of operations may be varied, partially omitted, overlapped to reduce the total elapsed time of operation, or reordered in an alternative sequence.

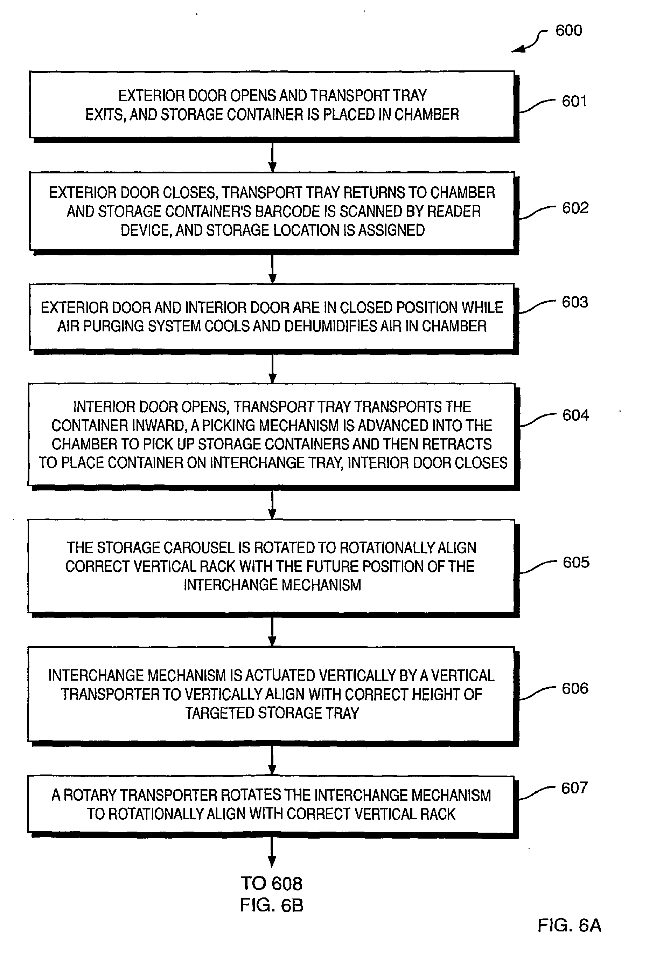

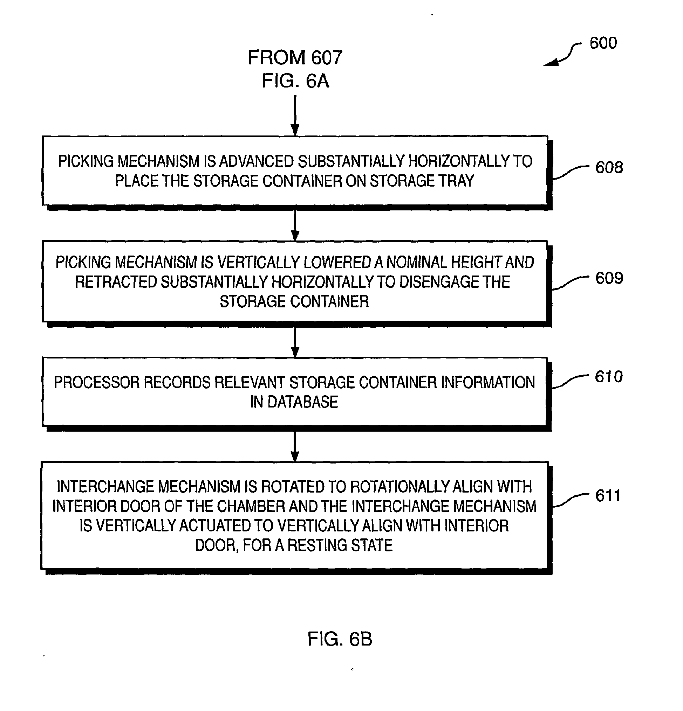

Operation for depositing **600** a storage container is provided in the flowchart of **FIGS. 6A-6B**. In a first step, **601,** the exterior door **62** opens and transport tray **63** exits, and storage container **3** is placed in chamber **60.** In step **602,** the exterior door **62** closes, transport tray **63** returns to chamber **60** and storage container's barcode is scanned by reader device **65,** and storage location is assigned. In step **603,** exterior door **60** and interior door **61** are in closed position while air purging system **66** cools and dehumidifies air in the chamber **60.** In step **604,** the interior door **61** opens, the transport tray **63** transports the container **3** inward, a picking mechanism **43** is advanced into the chamber **60** to pick up the storage containers and then retracts to place the container **3**.on interchange tray **44,** and the interior door closes. In step **605,** the storage carousel **20** is rotated to rotationally align the correct vertical rack **23** with the future position of the interchange mechanism **40.** In step **606,** the interchange mechanism **40** is actuated vertically by a vertical transporter **42** to vertically align with correct height of targeted storage tray **28.** In step **607,** a rotary transporter **43** rotates the interchange mechanism **40** to rotationally align with correct vertical rack **23.** In step **608,** the picking mechanism **43** is advanced substantially horizontally to place the storage container **3** on storage tray **28.** In step **609,** the picking mechanism **43** is vertically lowered a desired nominal distance, e.g., approximately 1/8-inch, and retracted substantially horizontally to disengage the storage container **3.** In step **610,** the processor records relevant storage container information in the database. In step **611,** provided no other activity is required at the storage carousel **20** (or at any stationary storage rack **26, 27**) the interchange mechanism **40** is rotated to rotationally align with interior door **61** of the chamber **60** and the interchange mechanism **60** is vertically actuated to vertically align with interior door **61,** for a resting state. It should be noted that a similar process and aspect applies to the stationary racks **26, 27,** except that the racks do not rotate.

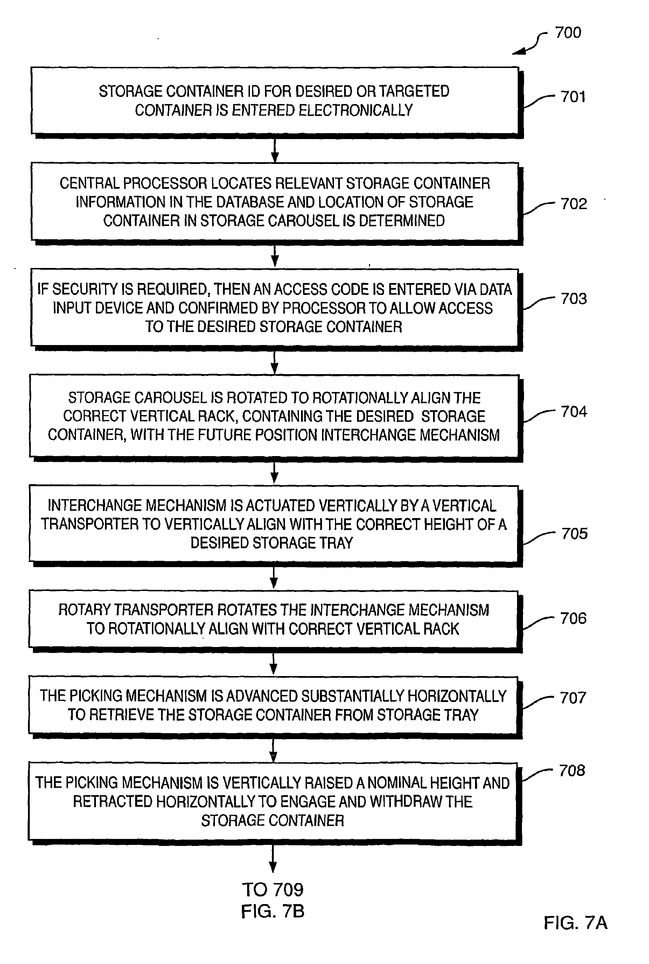

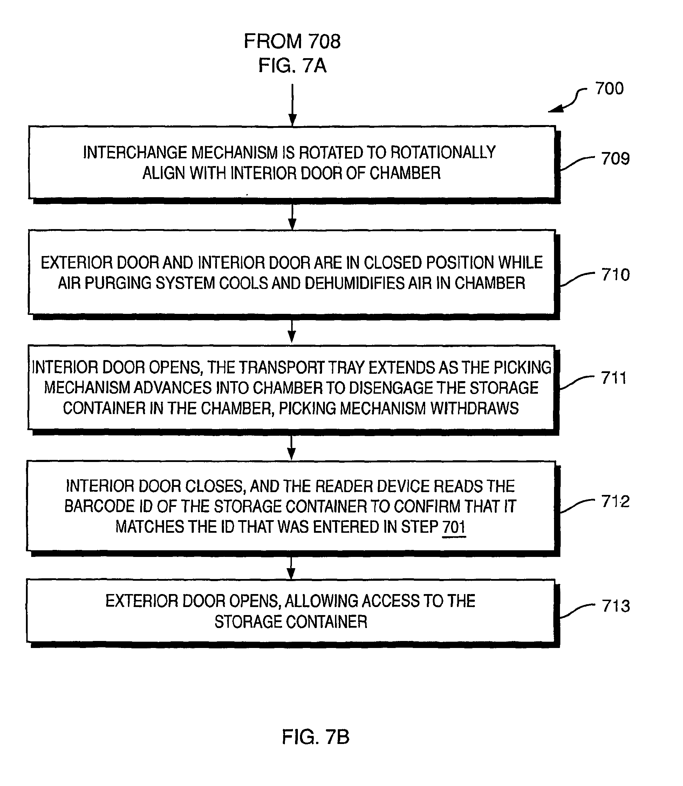

Next, the operation for retrieving **700** the desired or targeted containers **3** from the storage trays **28**, is provided in the flowchart of **FIGS. 7A-7B**. In a first step **701**, a storage container identification (ID) for a desired or targeted container is entered electronically or via data input device such a display panel integral with the apparatus housing or a remote there from, both of which being operatively connected to the control system **80.** In step **702,** a central processor **81** locates relevant storage container information in the database and location of storage container in storage carousel **20** (or stationary storage racks) is determined. Optionally, step **703 ,** if security is required, then an access code is entered via data input device such a display panel integral with the apparatus housing or a remote processor, and confirmed by central processor **81** to allow access to the desired storage container **3.** In step **704,** the storage carousel **20** is rotated to rotationally align the correct vertical rack **23,** containing the desired storage container **3,** with the future position of the interchange mechanism **40.** In step **705,** the interchange mechanism **40** is actuated vertically by a vertical transporter **42** to vertically align with the correct height of a desired storage tray **28.** In step **706,** the rotary transporter **43** rotates the interchange mechanism **40** to rotationally align with correct vertical rack **23.** In step **707,** the picking mechanism **43** is advanced substantially horizontally to retrieve the storage container **3** from storage tray **28.** In step **708,** the picking mechanism **43** is vertically raised a desired nominal distance, e.g., approximately 1/8-inch, and retracted horizontally to engage and withdraw the storage container **3.** In step **709,** the interchange mechanism **40** is rotated to rotationally align with interior door **61** of chamber **60.** In step **710,** the exterior door **62** and interior door **61** are in closed positions while air purging system **66** cools and dehumidifies air in chamber **60.** In step **711,** the interior door **61** opens, the transport tray **63** extends as the picking mechanism **43,** advancing into chamber **60** to disengage the storage container in the chamber **60.** In step **712,** the picking mechanism withdraws into the freezer compartment and the interior door **61** closes, and the reader device **65** reads the barcode ID of the storage container to confirm that it matches the ID that was entered in step **701** of the present invention retrieval process. In step **713,** the exterior door **62** opens, allowing access to the storage container **3.** It should be noted that a similar process and aspect applies to the stationary racks **26, 27,** except that the racks do not rotate.

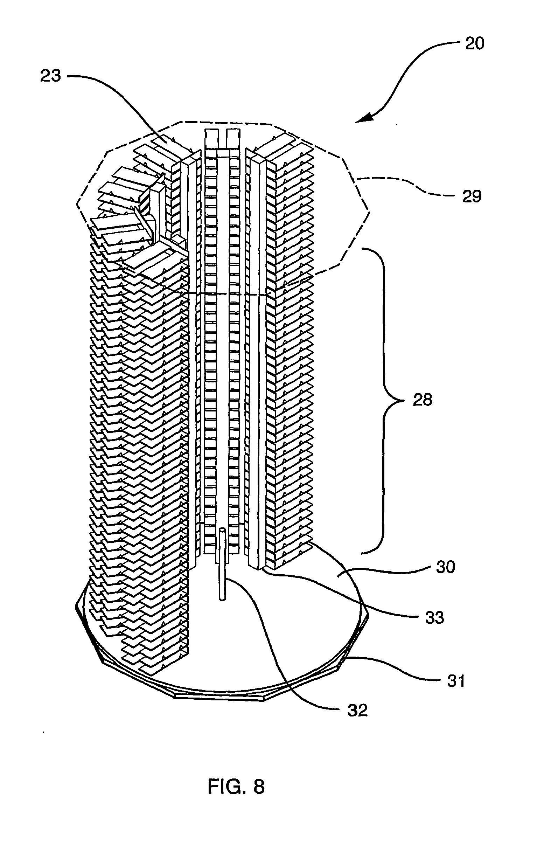

Next, details pertaining to the storage carousel **20** will be discussed, as schematically shown in **FIGS. 8-9**. The perspective view as shown in **FIG. 8** includes a carousel **20** having some racks **23** omitted for illustration purposes. The carousel **20** comprises an annular ring of vertical racks **23** arranged circumferentially between an upper horizontal plate **29** (shown in dashed lines) and a lower horizontal plate **30.** The carousel may be various sizes, dimensions, and shapes, including linear, rectangular, pentagonal, and hexagonal or the like. A base plate **31,** acts as a bearing brace to the support storage carousel **20** while allowing rotation of carousel **20** about the vertical axis. Rotation of carousel **20** is actuated by a motor driveshaft **32,** which runs through lower horizontal plate **30** and base plate **31** to communicate with a motor (not shown). The motor is preferably mounted beneath the floor of freezer compartment **10,** where the refrigeration equipment is housed, and where the motor is not exposed to the ultra-cold temperatures of freezer compartment **10.** Storage carousel **20** may rest on a ball bearing system to provide reduced friction at ultra-cold temperatures. The self-lubricating bearing system, e.g., graphite ceramic, may be used as well as other types known to those skilled in the art. Vertical racks **23** are mounted to upper horizontal plate **29** and lower horizontal plate **30** with right-angle braces or the like. The vertical racks **23** comprise a vertical support **33** and a plurality of adjustable storage trays **28** to hold a plurality of storage containers **3,** which could be of standard or varying size.

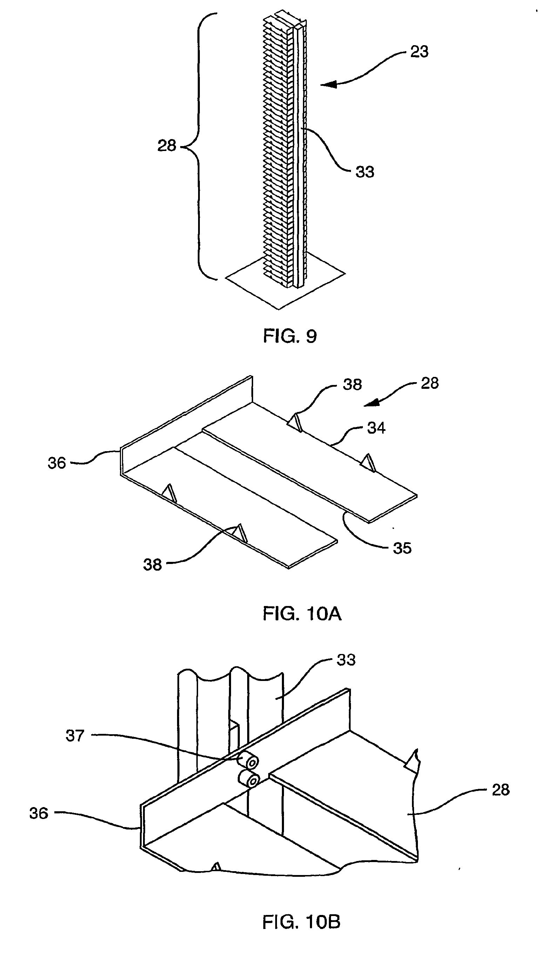

**FIG. 9** is a perspective view of an individual vertical rack **23,** comprised of a plurality of storage trays **28.**

Next, details pertaining to the storage trays **28** and cooperation with the vertical support **33** of the carousel **20** will be discussed, as best shown in **FIGS. 10A-10B.** Storage trays **28** have a flat, horizontally oriented support surface **34** with an open center **35** to allow the interchange mechanism **40** to engage the storage containers **3** either for placement onto storage tray **28** or for retrieval from storage tray **28.** The storage trays **28** have a flat vertically oriented attachment surface **36** positioned at a right angle to the proximal edge of storage trays **28,** which allows connection of storage trays **28** to vertical support **33** of the vertical racks **23** by an attachment assembly **37** (partially shown). Other configurations of the attachment assembly **37** are contemplated according to the type of interactions between the various components and subsystems. The distal edge of storage trays **28** is open and outward facing to allow access to the storage containers. Other configurations of the storage trays **28** are contemplated according to the type of interactions between the various components and subsystems. Vertically oriented raised guides **38** are situated on lateral edges of storage trays **28** to prevent storage containers from becoming misaligned on storage trays **28.** The raised guides **38** can be stamped out of the surface of storage trays **28,** or other suitable means known to those skilled in the art.

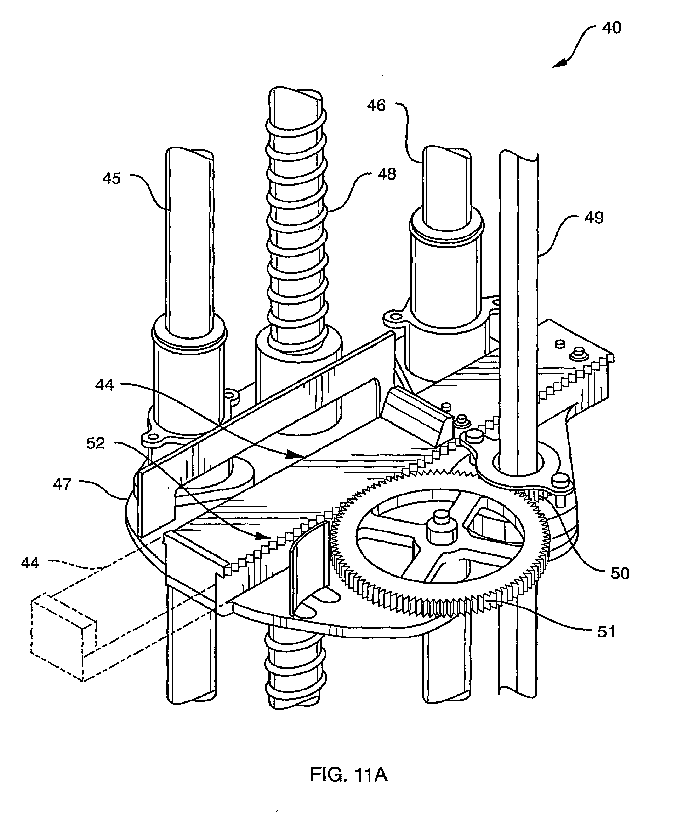

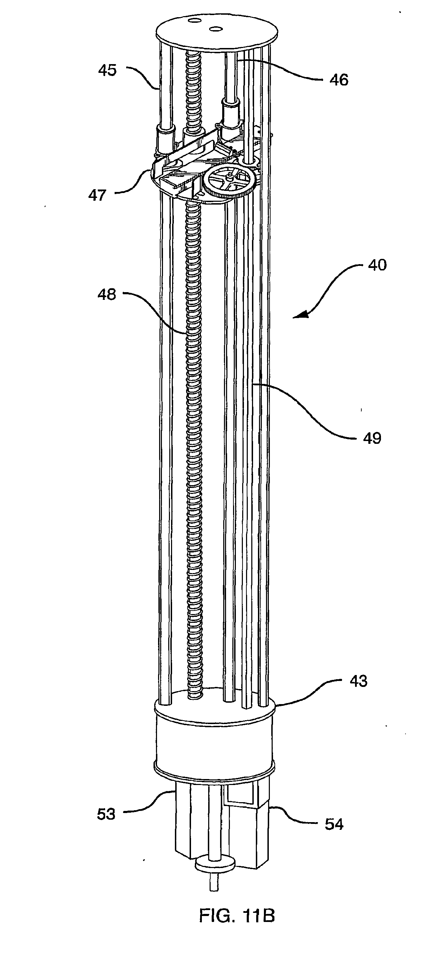

Next, details of an exemplary embodiment of the interchange mechanism **40** will be discussed, as best shown in **FIGS. 11A-11B.** In this particular embodiment the interchange mechanism **40** comprises a pair of guide rails **45** and **46** that are located with their axes vertically within the freezer compartment **10** and they extend for a substantial length as required by the discrete heights of the various interchange operations. The guide rails **45** and **46** are slidably mounted on the interchange plate **47.** A vertical lead screw **48** having an axis length-wise within the freezer compartment **10** is actuated by a motor **53,** located below the freezer compartment, for vertically translating the interchange plate **47** to a desired height. A vertically mounted rotating square shaft **49** is driven by a motor **54** mounted beneath the floor of freezer compartment **10.** The square shaft **49** drives the interchange tray **44** using a gear train, such as the square shaft gear **50** and tray gear **51,** as shown. The drive gear mates with a rack **52** in communication with the interchange tray **44.** During operation, the square shaft **49** rotates in a clockwise direction to drive the gear train and rack **52,** thereby driving the interchange tray **44** horizontally into an extended position, as shown by the dashed lines. While in the extended position, the interchange tray **44** is capable of retrieving or dropping off a container. Next, the square shaft **49** rotates in a counter-clockwise direction to drive the gear train and rack **52** in an opposite direction, causing the rack **52** and interchange tray **44** to retract to a rest position. The rotary transporter **43,** driven by a motor (not shown) mounted beneath the floor of the freezer compartment **10,** rotates the interchange mechanism **40** to rotationally align with correct vertical rack **23** or stationary storage rack **26, 26,** and interior door **61** of the chamber **60,** or any other position as required. The rotary transporter **43** may be pivoted, rotated, or translated using a means known to those skilled in the art.

It should be noted that the motors for the storage carousel **10,** vertical transporter **42,** rotary transporter **43,** picking mechanism **42,** and transport tray **63** can be a variety of types of motors known to those skilled in the art, including but not limited thereto servo motors and stepper motors, or any direct current (DC) motor with suitable position or velocity controllers. In the various preferred embodiments disclosed herein, the motors are mounted outside of the freezer compartment **10** to extend the life of the component and improve the overall serviceability of the apparatus. With the exception of the transport tray **63** the drive shafts are mounted through a series of sophisticated thermal seals and thermal couplers designed to maintain temperature stability throughout all operating cycles. In a choice embodiment, the servomotors may be of a SMART MOTOR by Antimatics, Corp. These type of servo motors are microprocessor controlled, ensuring accurate placement and monitoring of the robotics operating within the critical environment; however, any position or velocity controlled motors may be used.

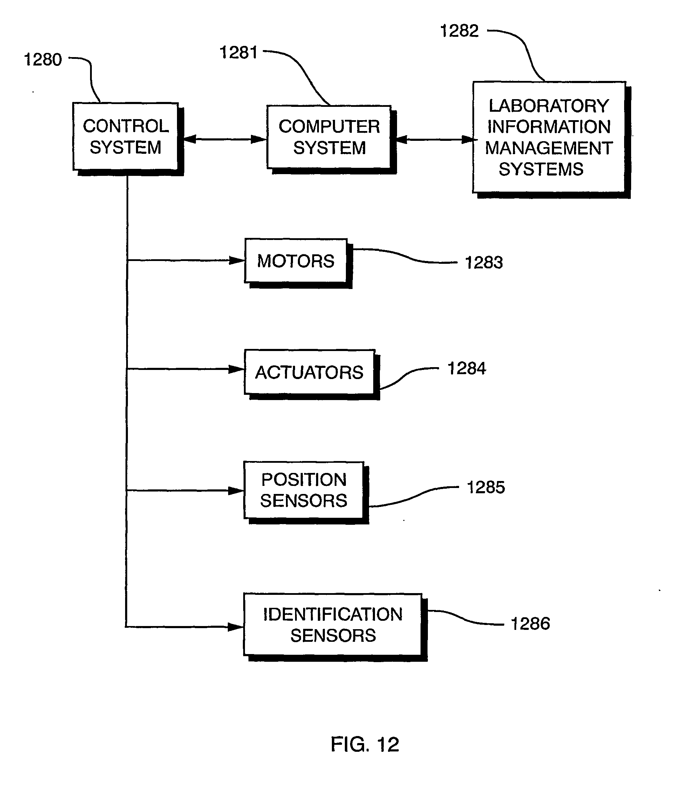

Next, the general features of the present invention control system **1280** will be discussed, as shown in the block diagram of **FIG. 12.** The control system **1280** interfaces with a computer system **1281** that may be integral with the housing **2** or remote via a wire or wireless communication, or any combination thereof. Moreover, the control system **1280** may be in communication with and integrated with a laboratory information management system (LIMS) **1282.** The control system **1280** is operatively connected with the various motors **1283,** actuators **1284,** position sensors **1285,** and identification sensors **1286.** It is contemplated that that the information derived from the sample or work pieces carried in the containers **3** while practicing the present invention will provide an information technology platform for the user. The computer system **1281** is intended to be a user-friendly, utilizing Windows-based platform or any other operating system, and may be integrated with a variety of laboratory information management systems. It is envisioned that the control system **1280** and computer system **1281** can be accessed directly by using a touch screen interface or remotely by a stand alone personal computer or with a local area network (LAN).

The present invention apparatus provides the user the capability, among other things, to set top-level user-definable parameters to control container (sample) access based on research groups, research campaigns or individual laboratories. For instance, sample data can be configured by the user to meet the user's particular research requirements. The database can then search the user's sample populations to find all the samples that match the user's requested research parameters. Moreover, time/temperature profiles and sample access histories are maintained continuously. The present invention allows the user to set sample migration thresholds. This feature, employing sample usage frequencies, prompts the movement of low demand samples into longer-term storage units - maximizing the efficiency of the user's sample process management system. Furthermore, the present invention apparatus enables the user to generate a variety of reports in support of the user's quality assurance needs. Finally, the user will benefit from the present invention's information technology by receiving excellent sample security, optimal sample visibility, optimal quality assurance, sample migration control and flexible data management.

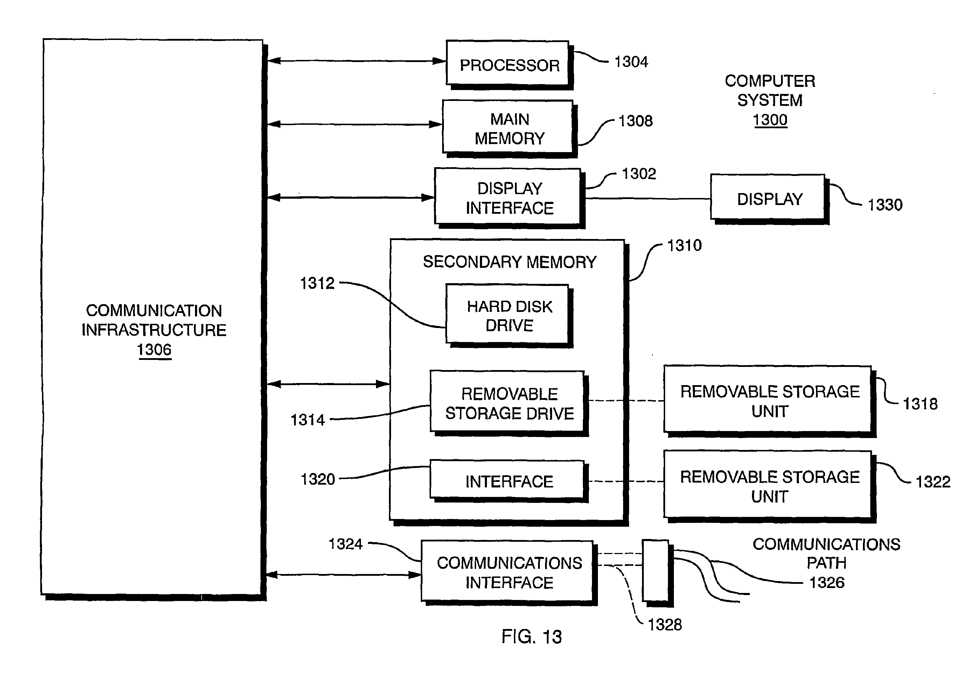

Next, exemplary embodiments of the control system and computer system will be discussed, as best shown in **FIG.13.** The controls and processing of present invention may be implemented using hardware, software or a combination thereof and may be implemented in one or more computer systems or other processing systems, such as personal digit assistants (PDAs). In an example embodiment, the invention was implemented in software running on a general purpose computer **1300** as illustrated in **FIG. 1300.** Computer system **1300** includes one or more processors, such as processor **1304.** Processor **1304** is connected to a communication infrastructure **1306** (e.g., a communications bus, cross-over bar, or network). Computer system **1300** includes a display interface **1302** that forwards graphics, text, and other data from the communication infrastructure **1306** (or from a frame buffer not shown) for display on the display unit **1330.**

Computer system **1300** also includes a main memory **1308,** preferably random access memory (RAM), and may also include a secondary memory **1310.** The secondary memory **1320** may include, for example, a hard disk drive **1312** and/or a removable storage drive **1314,** representing a floppy disk drive, a magnetic tape drive, an optical disk drive, etc. The removable storage drive **1314** reads from and/or writes to a removable storage unit **1318** in a well known manner. Removable storage unit **1318,** represents a floppy disk, magnetic tape, optical disk, etc. which is read by and written to by removable storage drive **1314.** As will be appreciated, the removable storage unit **1318** includes a computer usable storage medium having stored therein computer software and/or data.

In alternative embodiments, secondary memory **1310** may include other means for allowing computer programs or other instructions to be loaded into computer system **1300.** Such means may include, for example, a removable storage unit **1322** and an interface **1320.** Examples of such removable storage units/interfaces include a program cartridge and cartridge interface (such as that found in video game devices), a removable memory chip (such as a ROM, PROM, EPROM or EEPROM) and associated socket, and other removable storage units **1322** and interfaces **1320** which allow software and data to be transferred from the removable storage unit **1322** to computer system **1300.**

Computer system **1300** may also include a communications interface **1324.** Communications interface **1324** allows software and data to be transferred between computer system **1300** and external devices. Examples of communications interface **1324** may include a modem, a network interface (such as an Ethernet card), a communications port, a PCMCIA slot and card, etc. Software and data transferred via communications interface **1324** are in the form of signals **1328,** which may be electronic, electromagnetic, optical or other signals capable of being received by communications interface **1324.** Signals **1328** are provided to communications interface **1324** via a communications path (i.e., channel) **1326.** A channel **1326** (or any other communication means or channel disclosed herein) carries signals **1328** and may be implemented using wire or cable, fiber optics, a phone line, a cellular phone link, an RF link and other communications channels.

In this document, the terms "computer program medium" and "computer usable medium" are used to generally refer to media such as removable storage drive **1314,** a hard disk installed in hard disk drive **1312,** and signals **1328.** These computer program products are means for providing software to computer system **1300.** The invention includes such computer program products.

Computer programs (also called computer control logic) are stored in main memory **1308** and/or secondary memory **1310.** Computer programs may also be received via communications interface **1324.** Such computer programs, when executed, enable computer system **1300** to perform the features of the present invention as discussed herein. In particular, the computer programs, when executed, enable processor **1304** to perform the functions of the present invention. Accordingly, such computer programs represent controllers of computer system **1300.**

In an embodiment where the invention is implemented using software, the software may be stored in a computer program product and loaded into computer system **1300** using removable storage drive **1314,** hard drive **1312** or communications interface **1324.** The control logic (software), when executed by the processor **1304,** causes the processor **1304** to perform the functions of the invention as described herein.

In another embodiment, the invention is implemented primarily in hardware using, for example, hardware components such as application specific integrated circuits (ASICs). Implementation of the hardware state machine to perform the functions described herein will be apparent to persons skilled in the relevant art(s).

In yet another embodiment, the invention is implemented using a combination of both hardware and software.

In an example software embodiment of the invention, the methods described above were implemented in VISUAL BASIC control language, but could be implemented in other programs such as, but not limited to, C++ programming language.

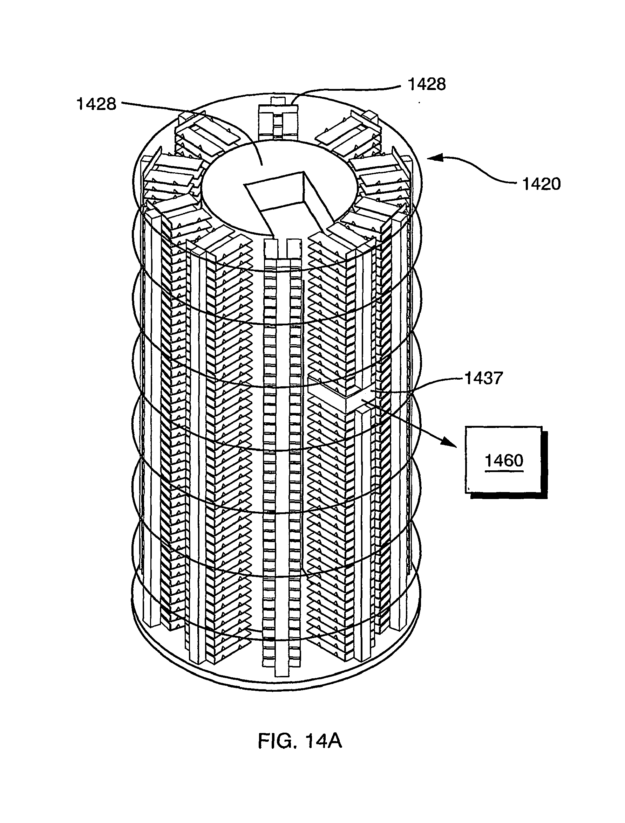

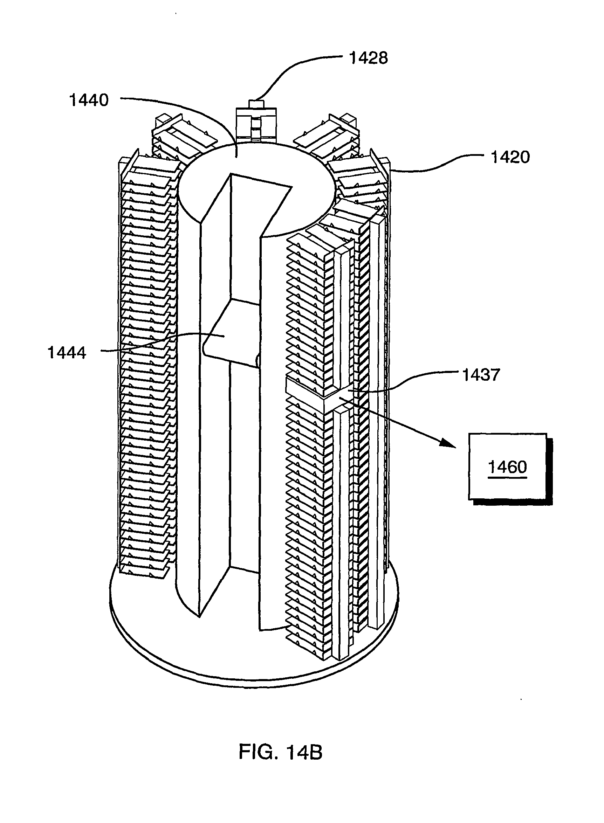

Next, details of an alternative second embodiment of the present invention will be discussed, as best shown in **FIGS. 14A-B.** The storage carousel is fixed in place (i.e., no rotation) providing a fixed hotel **1420.** The storage containers **1403** are accommodated on shelves **1428** in the same manner as in the storage carousel. However, the interchange mechanism **1440** is located in the central core **1439** of the fixed hotel **1420.** The interchange mechanism **1440** includes an interchange tray **1444,** and may rotate about its axis and travel vertically as previously discussed herein. The interchange mechanism **1440** retrieves storage containers from shelves, takes them to a vertical position aligned with an access portal **1437,** and moves them through the portal **1437** to the exterior of the freezer via the climate controlled chamber **1460.** It is noted that the access portal **1437** is a fixed hole in the fixed hotel **1420** allowing samples to access the interchange mechanism **1440.** One or more access portals may be used if one wishes to mate several fixed hotels **1420** or rotating carousels together, or provide more than one point of access portal **1437.** Furthermore, the access portal may be movable if one wishes to provide rotational movement to one "slice" of the hotel **1420.**

An advantage of this second embodiment approach, but not limited thereto is that it may be accommodated in a cylindrical freezer compartment, occupying less space. In addition, this apparatus and method obviates the need for a rotational mechanism for the carousel (unless one wishes to have a movable access port). All other aspects of the design are the same as previously described above.

In addition, as a third alternative embodiment, one could also have a second carousel outside the one depicted in **FIGS. 14A-14B,** so as to allow for greater storage space. In this embodiment the inside carousel could rotate so as to allow a vertical arrangement and rotational alignment of access ports to access any compartment in the outer carousel.

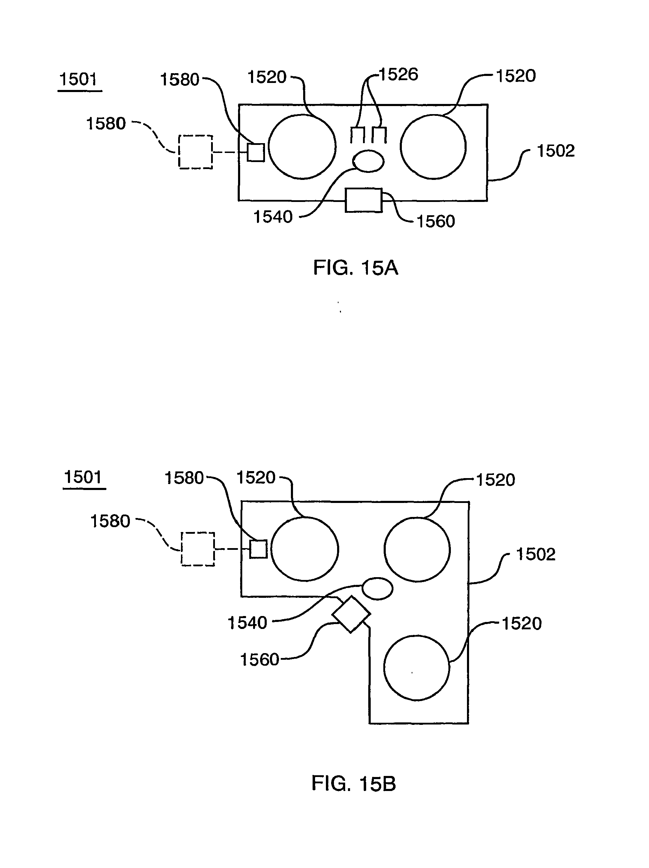

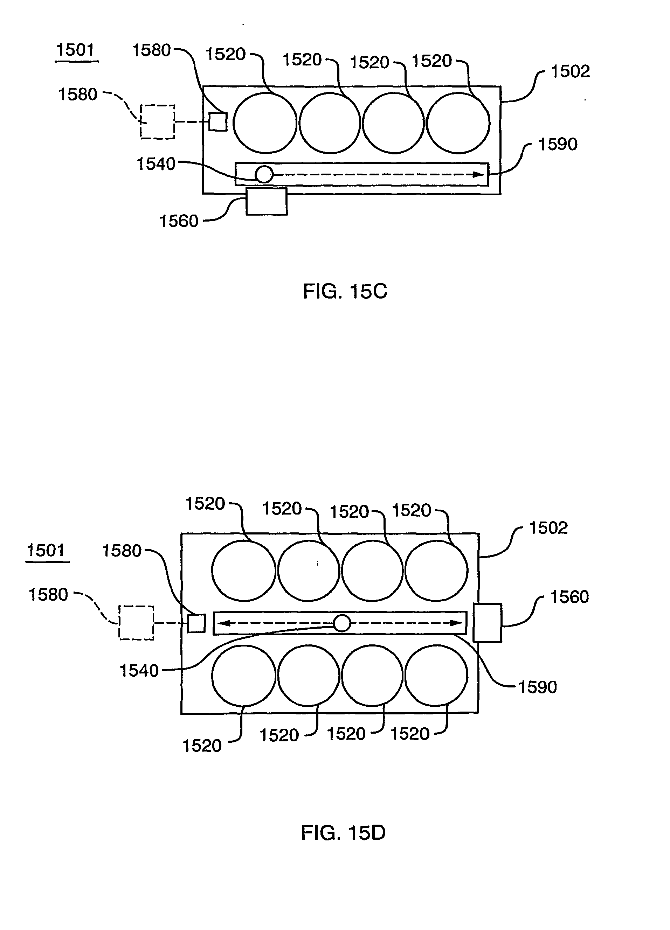

Next, details of providing an expanded network system of cooperating freezer apparatuses **1501** will be discussed, as best shown n **FIGS. 15A-D.** The plurality storage of carousels **1520** (or stationary storage racks **1526,1527** and fixed hotels), interchange mechanism **1540,** and climate control chamber **1560** operate with the methods and aspects described herein. The plurality of storage carousels **1520** (stationary racks or fixed hotels) operates in an enclosure **1502.** The enclosure **1502** may be equipment housing-type as previously discussed to accommodate a freezer unit or plurality of freezer units. Alternatively, the enclosure **1502** may be an entire room, or a plurality of rooms, as disclosed in the 5,921,102 Vago patent. The configurations shown in **FIGS. 15A-D** are illustrative in nature and are not intended to be exhaustive as other combinations and designs are contemplated. Essentially, the containers **1503** are interchanged, stored, deposited, and retrieved among the storage carousels **1520** (including stationary storage racks **1526,1527),** interchange mechanism **1540,** and climate-controlled chamber **1560** using the aspects and methods previously disclosed herein, while recognizing the enclosure **1502** may be a room or equipment housing, or any combination thereof A control system **1580** is operatively connected to the various components and subsystems, wherein the controls and processor are locally or remotely located.

The interchange mechanism **1540** cooperate with multiple locations allowing containers **1503** to pass among carousels **1520** and stationary racks **1526,1527,** and of course the climate-controlled chamber **1560**. As shown in **FIGS. 15C-D**, to accomplish this task, a translating mechanism **1590** is provided to translate or shift the interchange mechanism **1540** to the target carousel(s) **1520** or stationary racks **1526, 1527.** Various means are contemplated for translating the interchange mechanism **1540,** including but not limited thereto, track devices, wheels, conveyors, pulleys, suspension devices, belts, gears, or other robotic devices.

Some advantages of the present invention automated storage and retrieval apparatus for ultra low temperature freezers, and related method thereof, are that it provides a more organized storage and retrieval apparatus, less accumulation of moisture and frost within the cold storage compartment, less temperature fluctuation from sample withdrawal, and rapid random access to all specimens.

Moreover, another advantage of the present invention is that the apparatus can operate in a stand-alone mode or can be integrated into a completely automated laboratory. It is scalable to meet the needs of small laboratories as well as large institutions that will require long-term storage of large numbers of samples.

Another advantage of the present invention is that the apparatus can be designed as a slide-in unit for existing ultra-cold freezers, which will keep the majority of the hardware in the door so as to be insulated from the freezer compartment, minimizing both the number of low-temperature hardware components and the actual alteration to the freezer itself. A reduced number of moving component is continuously exposed to the normal design temperature of about -80° C, reducing the cost of production.

Further advantages of the present invention are attributed to the improved sample quality, lowered operating costs, and reduced maintenance of the automated storage and retrieval apparatus.

Still further, an advantage of the present invention is that the climate-controlled chamber prevents ambient, humid air from entering the interior of freezer compartment during storage container insertion and retrieval.

Finally, an advantage of the present invention is that it provides ultra-low temperature automation and user-friendly information technology in a proven reliable manner. It is contemplated that the present invention apparatus may provide an operation temperature below and above the ultra low operating temperature.

The invention may be embodied in other specific forms without departing from the spirit or essential characteristics thereof. The foregoing embodiments are therefore to be considered in all respects illustrative rather than limiting of the invention described herein. Scope of the invention is this indicated by the appended claims rather than by the foregoing description, and all changes which come within the meaning and range of equivalency of the claims are therefore intended to be embraced herein.

## Claims

1. An automated storage and retrieval apparatus (1) for storing containers (3) at ultra low temperatures, said apparatus comprising:
a freezer compartment (10), said freezer compartment (10) having a side wall (11);
a storage device (20) disposed inside said freezer compartment (10) for holding the containers (3);
a climate-controlled chamber (60) disposed on said side wall (11);
a climate system (66) for controlling the climate of said chamber;
an interchange mechanism (40) disposed inside said freezer compartment (10) configured to:
interchange a container (3) between said interchange mechanism (40) and said climate-controlled chamber (60) while in a chamber exchange position, and
interchange a container (3) between said interchange mechanism (40) and said storage device (20) while in a device exchange position;
said chamber (60) being configured to:
isolate the container (3) from said interchange mechanism (40) as container (3) is deposited from the exterior or placed into the exterior, and
isolate the container (3) from the exterior as container (3) is exchanged between said chamber and said interchange mechanism (40).

2. The apparatus of claim 1, wherein said interchange mechanism (40) is disposed inside said storage device (20) within said freezer compartment (10).

3. The apparatus of claim 1, wherein said chamber further comprises a transport tray (63) slidably mounted to said chamber for transporting the container (3) between an outer position closest to the exterior and an interior position closest to said interchange mechanism (40).

4. The apparatus of claim 1, wherein said chamber further comprises:
an exterior door, whereby said exterior door is adapted to allow the containers (3) to interchange between said chamber and the exterior, and
an interior door, whereby said interior door is adapted to allow the containers (3) to interchange between said chamber and said interchange mechanism (40).

5. The apparatus of claim 1, wherein said controlled chamber further comprises:
a motor (32) operably connected to said transport tray (63) for translating said tray (63) between the exterior position and interior position, and any position generally there between; and
said motor (32) being disposed outside said freezer compartment (10).

6. The apparatus of claim 1, wherein said climate system (66) comprises a dry gas supply to dehumidify said chamber and cool said chamber.

7. The apparatus of claim 1, wherein said chamber (60) comprises a writing device.

8. The apparatus of claim 1, wherein said chamber (60) comprises a reading device to identify the containers (3) as they are inserted into and retrieved from said chamber.

9. The apparatus of claim 1, further comprising a control system, wherein said control system is operatively connected with said storage device (20), said interchange mechanism (40), and chamber for controlling their operations.

10. The apparatus of claim 9, wherein said control system comprises a processor for processing data relative to the containers (3) being stored in and retrieved from the apparatus.

11. The apparatus of claim 9, wherein said control system comprises a processor for processing data relating to contents of the containers (3) being stored in and retrieved from the apparatus.

12. The apparatus of claim 9, further comprising a user station operatively connected to the apparatus, said user station comprising a data input means for inputting data to said processor relative to the containers (3).

13. The apparatus of claim 1, wherein said interchange mechanism (40) comprises:
a picking mechanism translating said interchange tray (44) for interchanging the container (3) with said storage device (20) or said chamber.

14. The apparatus of claim 1, wherein said interchange mechanism (40) further comprises: an interchange tray (44) configured to retain the container (3).

15. The apparatus of claim 14, wherein said interchange mechanism (40) further comprises:
a vertical transporter (42) configured to allow said interchange mechanism (40) to be translated vertically over a plurality of discrete heights.

16. The apparatus of claim 15, wherein said interchange mechanism (40) further comprises:
a rotary transporter, said rotary transporter configured to rotate said interchange mechanism (40) to a plurality of discrete circumferential positions.

17. The apparatus of claim 16, wherein said circumferential positions include rotational alignment corresponding to a position at which the interchange mechanism (40) can:
interchange selected containers (3) with said climate-controlled chamber while in the chamber exchange position; and
interchange selected containers (3) with said storage device (20) while in the carousel (20) exchange position.

18. The apparatus of claim 16, further comprises:
a motor (32) operably connected to said rotary transporter for rotating said interchange mechanism (40) the plurality of discrete circumferential orientations; and
said motor (32) being disposed outside said freezer compartment (10).

19. The apparatus of claim 15, wherein said discrete heights include the heights corresponding to a height at which the interchange mechanism (40) can:
interchange selected containers (3) with said climate-controlled chamber while in the chamber exchange position; and
interchange selected containers (3) with said storage device (20) while in the carousel (20) exchange position.

20. The apparatus of claim 15, further comprises:
a motor (32) operably connected to said vertical transporter (42) for vertically translating said interchange mechanism (40) to discrete heights; and
said motor (32) being disposed outside said freezer compartment (10).

21. The apparatus of claim 13, further comprises:
a motor (32) operably connected to said picking mechanism for substantially horizontally translating said picking mechanism between an extended position for use during the interchanging of the container (3), and a retracted position while the container (3) remains in the non-extended position; and
said motor (32) being disposed outside said freezer compartment (10).

22. The apparatus of claim 1, wherein said storage device (20) further comprises an annular ring of vertical racks (23) arranged circumferentially.

23. The apparatus of claim 22, wherein said storage device (20) further comprises storage trays (28) to hold a plurality of storage containers (3).

24. The apparatus of claim 23, wherein said storage trays (28) are adjustably mounted.

25. The apparatus of claim 22, wherein said storage device (20) further comprises an upper horizontal top plate (29) and a lower horizontal support plate (30).

26. The apparatus of claim 22, wherein said storage device (20) is rotatable so as to align said vertical racks (23) with said interchange mechanism (40).

27. The apparatus of claim 22, further comprising:
a motor (32) operably connected to said storage device (20) for rotating said storage device (20); and
said motor (32) being disposed outside said freezer compartment (10).

28. The apparatus of claim 1, wherein said storage device (20) is a storage carousel (20).

29. The apparatus of claim 1, wherein said storage device (20) is movable so as to align said storage device (20) with said interchange mechanism (40).

30. The apparatus of claim 1, wherein said storage device (20) is stationary.

31. A method for automatically storing and retrieving containers (3) in a freezer compartment (10) at ultra low temperatures, said method comprising:
providing a storage device (20) in said freezer compartment (10);
providing a climate controlled chamber (60);
providing an interchange mechanism (40) disposed inside said freezer compartment (10);
retrieving a stored container (3) from said freezer into said climate controlled chamber (60), while said chamber (60) is isolated from the exterior;
controlling the climate of said chamber (60) while isolating said chamber (60) for a predetermined time while the container (3) remains in said chamber; and
presenting the container (3) for pickup while said chamber (60) is isolated from said freezer compartment (10).

32. A method for automatically depositing and storing or for automatically storing and retrieving containers (3) in a freezer compartment (10) of an automated apparatus at ultra low temperatures, using an apparatus according to one of the preceding claims 1 to 28.

33. A method according to claim 31 or 32, wherein said storage device (20) is a carousel.
